# EUROPÄISCHE PATENTSCHRIFT

(11) **EP 3 272 700 B1**
(45) Veröffentlichungstag und Bekanntmachung des Hinweises auf die Patenterteilung: **19.12.2018**
(21) Anmeldenummer: 17177422.7
(22) Anmeldetag: 22.06.2017
(51) Int. Cl.: B66F 9/075, B60K 1/04

(54) **FLURFÖRDERZEUG**
INDUSTRIAL TRUCK
CHARIOT DE MANUTENTION

(30) Priorität: 18.07.2016 DE 102016113154
(43) Veröffentlichungstag der Anmeldung: 24.01.2018
(73) Patentinhaber: STILL GmbH, 22113 Hamburg (DE)
(72) Erfinder: KOHL, Tobias, 22525 Hamburg (DE); HAHN, Andreas, 21031 Hamburg (DE)
(74) Vertreter: Patentship Patentanwaltsgesellschaft mbH

(56) Entgegenhaltungen:
- DE-A1-102005 007 584
- DE-A1-102007 014 967
- DE-A1-102007 028 862

## Beschreibung

Die Erfindung betrifft ein Flurförderzeug, insbesondere elektrisch betriebenes Flurförderzeug, mit einer in einem Aufnahmeraum angeordneten Energieversorgungseinheit, insbesondere einem in einem Batteriefach angeordneten Batterieblock, wobei das Flurförderzeug mit einer seitlichen Öffnung für einen seitlichen Wechsel der Energieversorgungseinheit in horizontaler Richtung versehen ist, und eine Sicherungseinrichtung zum Sichern der in dem Aufnahmeraum angeordneten Energieversorgungseinheit während des Betriebs des Flurförderzeugs vorgesehen ist, wobei die Sicherungseinrichtung eine Anlagefläche für eine der seitlichen Öffnung zugewandten Fläche der Energieversorgungseinheit aufweist und als zwischen einer Freigabestellung und einer Verriegelungsstellung um eine Schwenkachse verschwenkbar am Flurförderzeug angeordneter Riegel ausgebildet ist, wobei der Riegel in Längsrichtung der Schwenkachse verschiebbar am Flurförderzeug angeordnet ist und ein mit dem Riegel in Wirkverbindung stehender Nachstellmechanismus vorgesehen ist, der die Anlagefläche des Riegels in Anlage an der der seitlichen Öffnung zugewandten Fläche der Energieversorgungseinheit hält.

Flurförderzeuge mit einem insbesondere elektrischen Antriebssystem, insbesondere Gegengewichtsgabelstapler, sind insbesondere in jüngerer Zeit häufig mit einer seitlichen Öffnung für einen seitlichen Wechsel der Energieversorgungseinheit in horizontaler Richtung ausgeführt. Als Energieversorgungseinheit kann hierbei ein Batterieblock, eine Brennstoffzelleneinheit oder eine Hybridantriebseinheit vorgesehen sein. Um die Energieversorgungseinheit zu wechseln, wird die im Flurförderzeug vorhandene Energieversorgungseinheit in horizontaler und seitlicher Richtung teilweise oder vollständig aus dem Batteriefach des Flurförderzeugs aus der seitlichen Öffnung heraus bewegt.

Der Wechsel der Energieversorgungseinheit kann mit einem Hallenkran unter Verwendung eines Batteriehebegeschirrs bzw. eines sogenannten C-Hakens erfolgen. Alternativ kann zum Wechsel der Energieversorgungseinheit ein zweites Flurförderzeug eingesetzt werden, indem die Energieversorgungseinheit mit einer Lastgabel des zweiten Flurförderzeugs unterfahren und angehoben werden. Ein Wechsel der Energieversorgungseinheit kann weiterhin mit einem zweiten Flurförderzeug in Verbindung mit einer Hebetraverse zum Ankranen der Energieversorgungseinheit durchgeführt werden.

Zur Erleichterung der Bewegung in horizontaler und seitlicher Richtung während des Wechsels der Energieversorgungseinheit können weiterhin an der Energieversorgungseinheit Rollen angeordnet werden oder im Bereich einer Aufstandsfläche in dem Aufnahmeraum des Flurförderzeugs eine Rollenbahn oder Gleitschienen angeordnet werden. Zum Wechsel der Energieversorgungseinheit kann diese aus dem Flurförderzeug über die seitlich Öffnung teilweise oder vollständig herausgezogen werden, um dann beispielsweise mit einem Hallenkran angehoben und weiter transportiert zu werden.

Während des Betriebs des Flurförderzeugs ist die Energieversorgungseinheit in dem Aufnahmeraum angeordnet und in dem Aufnahmeraum gegen eine unbeabsichtige Bewegung zu sichern und zu fixieren, insbesondere gegen eine unerwünschte seitlichen Bewegung in Fahrzeugquerrichtung. Eine seitliche Bewegung einer als Batterieblock ausgebildeten Energieversorgungseinheit in dem Aufnahmeraum kann beispielsweise zu Beschädigungen an dem Batterieblock führen, insbesondere durch scharfe Kanten, Schweißnähte oder Schweißrückstände in dem Aufnahmeraum. Derartige Beschädigungen an dem Batterieblock führen zu einem hohen Serviceaufwand und einem häufigen Ersatz des Batterieblocks. Ein in dem Aufnahmeraum verkanteter Batterieblock erschwert zudem den Batteriewechsel mit einer Wechselvorrichtung und macht diesen zeitlich aufwändig.

Darüber hinaus stellt eine seitliche Bewegung der Energieversorgungseinheit in dem Aufnahmeraum während des Betriebs des Flurförderzeugs ein sicherheitsrelevantes Problem dar, da sich der Schwerpunkt der Energieversorgungseinheit verlagert. Aus Sicherheitsgründen ist daher eine seitliche Bewegung der Energieversorgungseinheit in Fahrzeugquerrichtung in dem Aufnahmeraum während des Betriebs des Flurförderzeugs zu vermeiden und die Energieversorgungseinheit während des Betriebs in seitlicher Richtung zu sichern.

Eine unerwünschte seitliche Bewegung der Energieversorgungseinheit in dem Aufnahmeraum kann beispielsweise auftreten, wenn Beschleunigungen des Fahrzeugs zu entsprechenden horizontalen seitlichen Bewegungen der Energieversorgungseinheit in dem Aufnahmeraum führen, sofern die Reibung zwischen der Energieversorgungseinheit und der fahrzeugseitigen Aufstandsfläche in dem Aufnahmeraum überwunden wird. Derartige Kräfte können insbesondere bei einer Kurvenfahrt oder bei Kollisionen auftreten, die beispielsweise beim Aufnehmen einer Last oder beim Anstoßen an ein Hindernis auftreten können, insbesondere beim Anstoßen an ein Hindernis mit dem Gegengewicht bei einem Gegengewichtsgabelstapler.

Um eine derartige unerwünschte seitliche Bewegung der Energieversorgungseinheit während des Betriebs des Flurförderzeugs zu vermeiden und insbesondere ein ungewolltes seitliches Herausrutschen bzw. Herausrollen der auswechselbaren Energieversorgungseinheit bei einem Flurförderzeug mit einem seitlichen Wechsel der Energieversorgungseinheit aus der seitlichen Öffnung zu vermeiden, werden bislang als Verriegelungseinrichtungen ausgebildete Sicherungseinrichtungen verwendet, die an der mit der Öffnung versehenen Rahmenseite des Flurförderzeugs angeordnet sind. Die Sicherungseinrichtung weist hierzu eine Anlagefläche auf, die mit einer der seitlichen Öffnung zugewandten Fläche der Energieversorgungseinheit zusammenwirkt, so dass ein seitliches Herausrutschen der Energieversorgungseinheit aus der seitlichen Öffnung des Flurförderzeugs vermieden werden kann.

Hierzu ist beispielsweise aus der einen Gabelstapler offenbarenden DE 103 46 550 A1 bekannt, mit einer die seitliche Öffnung verschließenden Tür gleichzeitig die Energieversorgungseinheit in seitlicher Richtung zu sichern. Eine derartige Tür als Sicherungseinrichtung, um unerwünschte Bewegungen der Energieversorgungseinheit in seitlicher Richtung während des Betriebs des Flurförderzeugs zu vermeiden, weist jedoch einen hohen Bauaufwand auf.

Aus der DE 10 2007 028 862 A1 ist es bekannt, an der Seitenfläche des Aufnahmeraums als Sicherungseinrichtung einen zwischen einer Freigabestellung und einer Verriegelungsstellung verschwenkbaren Riegel vorzusehen, der in der Verriegelungsstellung eine starre mechanische Sperre gegen seitliches Ausbrechen und Herausrutschen der Energieversorgungseinheit aus dem Aufnahmeraum bildet. Der zwischen einer Freigabestellung und einer Verriegelungsstellung verschwenkbare Riegel ist mit der Schwenkachse starr am Fahrzeugkörper, beispielsweise dem Rahmen des Flurförderzeugs oder einem Gegengewicht befestigt.

Durch Toleranzen, beispielsweise Fertigungstoleranzen, in den Energieversorgungseinheiten und dem Fahrzeugkörper des Flurförderzeugs entsteht jedoch ein unvermeidbares Spiel in Fahrzeugquerrichtung zwischen dem starr am Flurförderzeug angeordneten schwenkbaren Riegel und der in dem Aufnahmeraum angeordneten Energieversorgungseinheit. Aufgrund dieses Spiels sind jedoch noch unerwünschte Bewegungen der Energieversorgungseinheit in Fahrzeugquerrichtung während des Fahrbetriebs des Flurförderzeugs möglich, die zu mechanischen Geräuschen und zu zusätzlichen Belastungen an der Sicherungseinrichtung führen können. Daher ist der verschwenkbare Riegel entsprechend stabil auszuführen, wodurch der Bauaufwand für die Sicherungseinrichtung erhöht wird. Die aufgrund dieses Spiels noch möglichen unerwünschten Bewegungen der Energieversorgungseinheit in Fahrzeugquerrichtung während des Fahrbetriebs des Flurförderzeugs können weiterhin zu Beschädigungen an der Energieversorgungseinheit sowie zu Beschädigungen in dem Aufnahmeraum des Flurförderzeugs führen.

Um das aufgrund der Toleranzen unvermeidbare Spiel in Fahrzeugquerrichtung zwischen dem starr am Flurförderzeug angeordneten schwenkbaren Riegel und der in dem Aufnahmeraum angeordneten Energieversorgungseinheit auszugleichen, ist es bereits bekannt, ein zusätzliches Spannmittel an der Sicherungseinrichtung vorzusehen. Ein Spannmittel kann beispielsweise von einem schraubbaren Riegel oder einer an dem Riegel angeordneten zusätzlichen Schraubklemme oder Spannschraube gebildet werden, die von einer Bedienperson manuell bedient und beispielsweise mit der Hand angezogen bzw. gelöst werden muss. Mit einem derartigen Spannmittel an dem verschwenkbaren Riegel kann jedoch nur das Spiel zwischen dem Riegel und der Energieversorgungseinheit in Bewegungsrichtung der Energieversorgungseinheit ausgeschaltet und eliminiert werden, das unmittelbar nach dem Einführen der Energieversorgungseinheit in den Aufnahmeraum besteht. Eine Verspannung der Energieversorgungseinheit in dem Aufnahmeraum in seitlicher Richtung kann jedoch nicht sichergestellt werden. Im Fahrbetrieb des Flurförderzeugs kann somit die Energieversorgungseinheit an einen der Öffnung gegenüberliegend angeordneten fahrzeugseitigen Anschlag in dem Aufnahmeraum rutschen, so dass erneut ein Spiel in Fahrzeugquerrichtung zwischen dem starr am Flurförderzeug angeordneten schwenkbaren Riegel und der in dem Aufnahmeraum angeordneten Energieversorgungseinheit aufritt. Die Gründe für ein mangelndes Verspannen der Energieversorgungseinheit in dem Aufnahmeraum trotz angezogenem Spannmittel können darin liegen, dass das Spannmittel aus Nachlässigkeit nicht angezogen wird, das Spannmittel sich im Betrieb des Flurförderzeugs löst, oder beim Anziehen des Spannmittels die Energieversorgungseinheit nicht an einem gegenüberliegend zu der Öffnung angeordneten fahrzeugseitigen Anschlag in dem Aufnahmeraum anliegt und somit ein Spiel in seitlicher Richtung an der der Öffnung gegenüberliegenden Fahrzeugseite zwischen dem Aufnahmeraum und der Energieversorgungseinheit verbleibt. In der Regel kann bei einem Anziehen des Spannmittels mit der Hand keine ausreichende hohe Kraft erzeugt werden, um die Energieversorgungseinheit, die im Falle der Ausbildung als Batterieblock das Gewicht von mehreren hundert Kilo bis zu mehreren Tonnen aufweisen kann, in seitlicher Richtung zu verschieben und gegen den entsprechenden fahrzeugseitigen Anschlag im Aufnahmeraum zu verspannen.

Die DE 10 2005 007 584 A1 offenbart ein gattungsgemäßes Flurförderzeug, bei dem ein Riegel in Längsrichtung der Schwenkachse verschiebbar am Flurförderzeug angeordnet ist und bei dem ein mit dem Riegel in Wirkverbindung stehender Nachstellmechanismus vorgesehen ist, der die Anlagefläche des Riegels in Anlage an der der seitlichen Öffnung zugewandten Fläche der Energieversorgungseinheit hält. Der Nachstellmechanismus ist von einem Feder- und/oder Dämpferelement gebildet, das zwischen einem am Flurförderzeug angeordneten Lagerbock und einer mittels einer Zugstange an dem Riegel befestigten Lochplatte angeordnet ist.

Der vorliegenden Erfindung liegt die Aufgabe zugrunde, ein Flurförderzeug der eingangs genannten Gattung zur Verfügung zu stellen, bei der eine von einem schwenkbaren Riegel gebildete Sicherungseinrichtung für die Energieversorgungseinheit zur Verfügung gestellt wird, mit der das seitliche Spiel der Energieversorgungseinheit in dem Aufnahmeraum sicher eliminiert werden kann.

Diese Aufgabe wird erfindungsgemäß dadurch gelöst, dass der Nachstellmechanismus als Keilmechanismus ausgebildet, der einen mit dem Riegel zusammenwirkenden Keil aufweist. Mit einem derartigen, in Längsrichtung der Schwenkachse verschiebbar am Flurförderzeug angeordneten Riegel und mit einem Nachstellmechanismus, der eine Längsbewegung des Riegels in Längsrichtung der Schwenkachse erzeugt, um die Anlagefläche des Riegels in Anlage an der der seitlichen Öffnung zugewandten Fläche der Energieversorgungseinheit zu halten, kann auf einfache Weise eine Einstellmöglichkeit und Nachstellmöglichkeit des Riegels in Bewegungsrichtung der Energieversorgungseinheit geschaffen werden, mit der ein seitliches Spiel zwischen dem Riegel und der Energieversorgungseinheit eliminiert und somit ein Anliegen des Riegels an der Energieversorgungseinheit erzielt werden kann und weiterhin ein seitliches Spiel in Bewegungsrichtung der Energieversorgungseinheit zwischen der Energieversorgungseinheit und einem fahrzeugseitigen Anschlag im Aufnahmeraum eliminiert werden kann. Eine unerwünschte seitliche Bewegung der Energieversorgungseinheit im Betrieb des Flurförderzeugs kann somit sicher und auf einfache Weise vermieden werden. Durch den Nachstellmechanismus des Riegels können somit unerwünschte Bewegungen der Energieversorgungseinheit in seitlicher Richtung während des Betriebs des Flurförderzeugs wirksam vermieden werden, so dass Beschädigungen an der Energieversorgungseinheit sowie Beschädigungen in dem Aufnahmeraum des Flurförderzeugs sicher verhindert werden können.

Mit einem von einem Keil gebildeten Nachstellmechanismus kann ein einfach aufgebauter, robuster und funktionssicher arbeitender Nachstellmechanismus gebildet werden, der eine Längsbewegung des Riegels in Längsrichtung der Schwenkachse erzeugt und mit dem seitliches Spiel zwischen dem schwenkbaren Riegel und der Energieversorgungseinheit zuverlässig eliminiert wird.

Besondere Vorteile ergeben sich, wenn der Nachstellmechanismus gemäß einer vorteilhaften Weiterbildung der Erfindung selbstnachstellend ausgebildet ist, so dass bei in der Verriegelungsstellung befindlichem Riegel der Riegel bei einer Bewegung der Energieversorgungseinheit in Fahrzeugquerrichtung selbstständig eine Axialbewegung in Längsrichtung der Schwenkachse durchführt. Mit einem selbstnachstellenden Nachstellmechanismus kann eine selbsttätige und automatische Nachstellung des in der Verriegelungsstellung befindlichen Riegels während des Betriebs des Flurförderzeugs erzielt werden, um noch vorhandenes seitliches Spiel nach dem Einsetzen der Energieversorgungseinheit in dem Aufnahmeraum zu eliminieren. Sofern bei einer ungünstigen Lage der Energieversorgungseinheit in dem Aufnahmeraum nach dem Wechsel der Energieversorgungseinheit beispielsweise ein seitliches Spiel zwischen der Energieversorgungseinheit und einem fahrzeugseitigen Anschlag auf der Gegenseite der Energieversorgungseinheit und somit an der gegenüberliegenden Fahrzeugseite vorhanden ist und im Betrieb des Flurförderzeugs eine entsprechende Bewegung der Energieversorgungseinheit in seitlicher Richtung stattfindet, kann durch den selbstnachstellenden Nachstellmechanismus der in der Verriegelungsstellung befindliche Riegel durch eine Axialbewegung entlang der Schwenkachse der Bewegung der Energieversorgungseinheit nachgeführt werden, so dass das nach dem Einsetzen der Energieversorgungseinheit in dem Aufnahmeraum noch vorhanden Spiel ebenfalls eliminiert wird und erzielt wird, dass nach einer entsprechende Bewegung der Energieversorgungseinheit in dem Aufnahmeraum der Riegel mit der Anlagefläche in Anlage an der Fläche der Energieversorgungseinheit verbleibt. Hierdurch kann die Energieversorgungseinheit sicher gegen unerwünschte seitliche Bewegung im Aufnahmeraum gesichert werden.

Gemäß einer vorteilhaften Ausgestaltungsform der Erfindung weist der Riegel einen Lagerbolzen auf, der in einem Lagerbauteil, das am Flurförderzeug befestigt ist, um die Schwenkachse gelagert ist und der in dem Lagerbauteil in Längsrichtung der Schwenkachse längsverschiebbar angeordnet ist, wobei der Keil mit einer Schrägfläche an einer Schrägfläche des Lagerbauteils anliegt und mit dem Lagerbolzen in Wirkverbindung steht, so dass durch eine Bewegung des Keils entlang der Schrägfläche eine Axialbewegung des Lagerbolzens in Längsrichtung der Schwenkachse erzeugt wird. Mit einem Keil, der mit einer Schrägfläche an einer Schrägfläche des Lagerbauteils anliegt und den Lagerbolzen betätigt, kann auf einfache Weise eine Axialbewegung des drehbar in dem Lagerbauteil angeordneten Lagerbolzens in Längsrichtung der Schwenkachse erzeugt werden.

Bevorzugt ist der Lagerbolzen mit einem Mitnehmer versehen, an dem der Keil anliegt. Hierdurch kann der sich entlang der Schrägfläche des Lagerbauteils bewegende Keil auf einfache Weise eine Kraft auf den Lagerbolzen ausüben, um eine Axialbewegung des Lagerbolzens in Längsrichtung der Schwenkachse zu erzielen.

Besondere Vorteile sind erzielbar, wenn gemäß einer bevorzugten Ausführungsform der Erfindung zwischen der Schrägfläche des Keils und der Schrägfläche des Lagerbauteils eine Selbsthemmung vorgesehen ist. Durch einen entsprechenden Neigungswinkel der Schrägfläche des Keils und der Schrägfläche des Lagerbauteils kann eine Selbsthemmung erzielt werden, so dass vermieden werden kann, dass sich der Keil durch die Energieversorgungseinheit bewegen lässt. Hierdurch kann die spielfreie Anordnung und Sicherung der Energieversorgungseinheit mittels des Riegels während des Betriebs des Flurförderzeugs sicher erzielt und aufrechterhalten werden.

Gemäß einer vorteilhaften Weiterbildung der Erfindung ist ein eine Kraft erzeugender Aktuator vorgesehen, der den Keil derart entlang der Schrägfläche des Lagerbauteils beaufschlagt, dass der Riegel von der Kraft des Aktuators in Fahrzeugquerrichtung nach Innen beaufschlagt wird. Mit einem derartigen Aktuator wird auf einfache Weise erzielt, dass der Riegel die Energieversorgungseinheit permanent sichert und der Riegel bei einer Bewegung der Energieversorgungseinheit in Fahrzeugquerrichtung nach Innen selbstständig der Bewegung der Energieversorgungseinheit mit einer Axialbewegung entlang der Schwenkachse folgt, so dass Spiel zwischen dem Riegel und der Energieversorgungseinheit im Betrieb des Flurförderzeugs sicher eliminiert wird.

Der Aktuator ist gemäß einer vorteilhaften Ausgestaltungsform der Erfindung als Federeinrichtung, insbesondere als Druckfeder, ausgebildet.

Alternativ kann der Aktuator als Gasfeder oder als Spindel ausgebildet sein.

Gemäß einer bevorzugten Ausgestaltungsform der Erfindung greift der Aktuator an einem Betätigungshebel an, der an dem Lagerbauteil schwenkbar gelagert ist und der mit dem Keil gekoppelt ist. Über einen am Lagerbauteil schwenkbar angeordneten Betätigungshebel kann der Keil auf einfache Weise mittels des Aktuators entlang der Schrägfläche des Lagerbauteils verstellt werden.

Die Kopplung des Betätigungshebels mit dem Keil weist bevorzugt einen Zapfen auf, der in eine langlochartige Ausnehmung eingreift. Eine Schwenkbewegung des Betätigungshebels kann somit auf einfache Weise in eine Bewegung des Keils entlang der Schrägfläche des Lagerbauteils umgewandelt werden.

Der Zapfen ist hierbei bevorzugt an dem Keil und die langlochartige Ausnehmung an dem Betätigungshebel angeordnet.

Besondere Vorteile ergeben sich, wenn der Betätigungshebel mit einer manuell betätigbaren Betätigungsfläche versehen ist, an der eine der Kraft des Aktuators entgegenwirkende Betätigungskraft aufbringbar ist. Durch die manuelle Betätigung des Betätigungshebels an der Betätigungsfläche kann auf einfache Weise der Keil derart entlang der Schrägfläche des Lagerbauteils verstellt werden, dass der in der Verriegelungsstellung befindliche Riegel von der Energieversorgungseinheit freikommt, so dass der Riegel zum Wechsel der Energieversorgungseinheit in die Freigabestellung verschwenkt werden kann, um die Verriegelung der Energieversorgungseinheit im Aufnahmeraum des Flurförderzeugs zu lösen.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer perspektivischen Darstellung,
- Figur 2: einen Ausschnitt eines erfindungsgemäßen Flurförderzugs mit einer erfindungsgemäßen Sicherungseinrichtung in einer vergrößerten Darstellung,
- Figur 3: die erfindungsgemäße Sicherungseinrichtung in einer perspektivischen Darstellung und
- Figur 4: die erfindungsgemäße Sicherungseinrichtung in einer Vorderansicht.

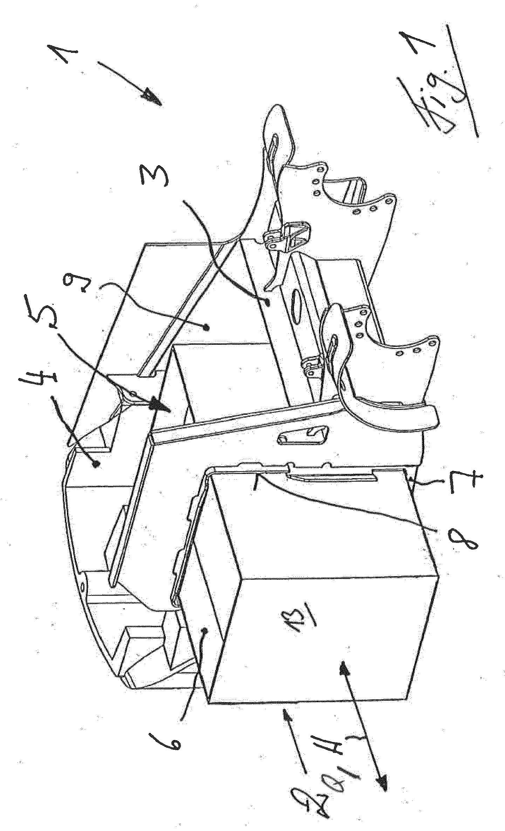

In der Figur 1 ist ein erfindungsgemäßes, beispielsweise als Gegengewichtsgabelstapler ausgebildetes Flurförderzeug 1, das mit einem seitlichen und horizontalen Wechsel einer Energieversorgungseinheit 2 in Fahrzeugquerrichtung Q versehen ist, in einer perspektivischen Ansicht dargestellt.

In einem mittleren Abschnitt eines von einem Fahrzeugrahmen 3, einem Gegengewicht 4 und einem nicht näher dargestellten Fahrerschutzdach gebildeten Fahrzeugkörpers des Flurförderzeugs 1 ist ein Aufnahmeraum 5 zur Aufnahme der Energieversorgungseinheit 2 ausgebildet. Als Energieversorgungseinheit 2 kann beispielsweise ein Batterieblock 6, eine Brennstoffzelleneinheit oder eine Hybridantriebseinheit mit einem Verbrennungsmotor und einem Generator sowie gegebenenfalls einer Batterie vorgesehen werden. Im vorliegenden Ausführungsbeispiel ist der Aufnahmeraum 5 als Batteriefach zur Aufnahme einer als Batterieblock 6 ausgebildeten Energieversorgungseinheit 2 ausgebildet. Der Batterieblock 6 steht hierbei mit einer Batterieblockunterseite auf einer Aufstandsfläche 7 des Aufnahmeraums 5 auf. Die Aufstandsfläche 7 kann hierbei von einer Bodenplatte des Flurförderzeugs 1 gebildet werden, wobei die Energieversorgungseinheit 2 direkt auf dem Aufstandsfläche 7 aufstehen kann oder mittels einer nicht näher dargestellten fahrzeuginternen Rollenbahn bzw. nicht näher dargestellten Rollen an der Unterseite der Energieversorgungseinheit 2.

Das Flurförderzeug 1 ist auf einen seitlichen Wechsel der als Batterieblock 6 ausgebildeten Energieversorgungseinheit 2 in seitlicher und horizontaler Richtung H, d.h. in Fahrzeugquerrrichtung Q, eingerichtet. Der Fahrzeugkörper ist hierzu an der rechten Fahrzeugseite mit einer seitlichen Öffnung 8 versehen, durch die die Energieversorgungseinheit 2 in seitlicher und horizontaler Richtung - wie in der Figur 1 durch den die Wechselrichtung verdeutlichenden Pfeil H verdeutlicht ist - zum Wechsel der Energieversorgungseinheit 2 aus dem Aufnahmeraum 5 zumindest teilweise herausbewegt bzw. in den Aufnahmeraum 5 hineinbewegt werden kann. In der Figur 1 ist eine Wechselposition dargestellt, in der sich die Energieversorgungseinheit 2 zumindest teilweise seitlich außerhalb des Aufnahmeraums 5 befindet. In einer Betriebsposition befindet sich die Energieversorgungseinheit 2 vollständig in dem Aufnahmeraum 5.

Der Aufnahmeraum 5 ist hierbei nach vorne durch ein vorderes Rahmenblech, zur linken Fahrzeugseite durch ein seitliches Rahmenblech 9 und nach hinten durch das Gegengewicht 4 abgrenzt. In Bereich der linken Fahrzeugseite kann hierbei ein nicht näher dargestellter Anschlag für die Energieversorgungseinheit 2 ausgebildet werden, beispielsweise ein entsprechender Anschlag an dem Rahmenblech 9 oder dem Gegengewicht 4, der die eingeschobene Position der Energieversorgungseinheit 2 definiert und an dem die Energieversorgungseinheit 2 mit einer entsprechenden linken Stirnfläche während des Betriebs des Flurförderzeugs anliegt.

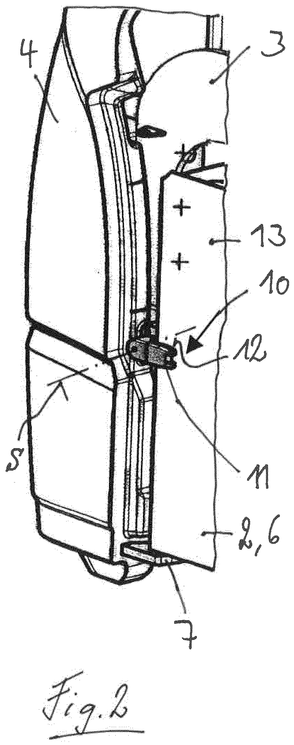

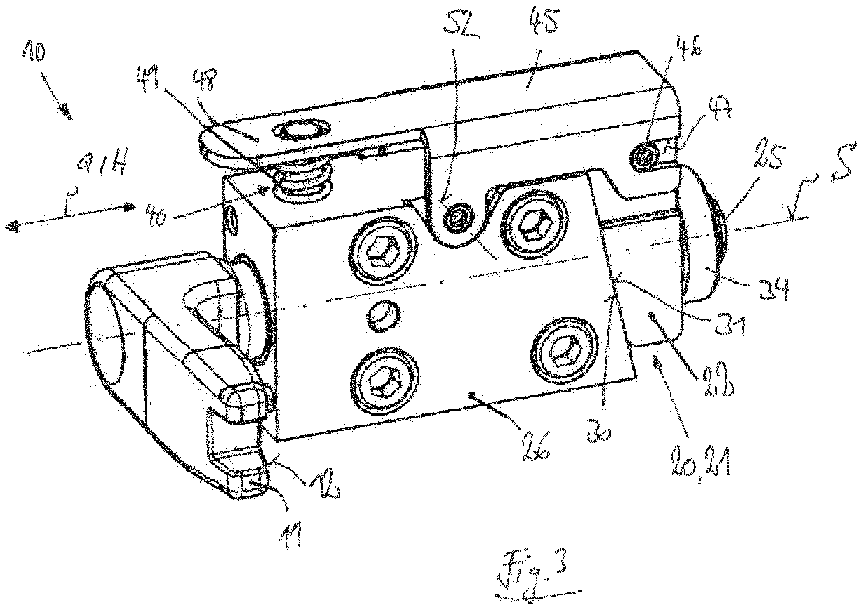

In den Figuren 2 bis 4 ist eine erfindungsgemäße Sicherungseinrichtung 10 dargestellt, mittels der die Energieversorgungseinheit 2 während des Betriebs des Flurförderzeugs 1 in dem Aufnahmeraum 5 gegen unerwünschte seitliche Bewegungen in Fahrzeugquerrichtung Q und somit in Bewegungsrichtung der Energieversorgungseinheit 2 gesichert werden kann.

Die Sicherungseinrichtung 10 ist als ein zwischen einer Freigabestellung und einer Verriegelungsstellung um eine Schwenkachse S verschwenkbar am Flurförderzeug 1 angeordneter Riegel 11 ausgebildet. Der Riegel 11 weist eine Anlagefläche 12 auf, mit der Riegel 11 an einer der Öffnung 8 zugewandten rechten Stirnfläche 13 der Energieversorgungseinheit 2 anliegt, um die die Energieversorgungseinheit 2 gegen ein unbeabsichtigtes Rutschen in Fahrzeugquerrichtung Q und somit in Wechselrichtung H zu sichern. Die Schwenkachse S des Riegels 11 ist in Fahrzeugquerrrichtung Q orientiert angeordnet.

In der Riegel 11 ist in den Figuren 2 bis 4 in der Verriegelungsstellung dargestellt. Durch Verschwenken des Riegels 11 um die Schwenkachse S um 90° nach oben bzw. unten kann der Riegel 11 in die Freigabestellung verschwenkt werden.

Der um die Schwenkachse S verschwenkbare Riegel 11 ist erfindungsgemäß in Längsrichtung der Schwenkachse S verschiebbar am Flurförderzeug 1 angeordnet und es ist ein mit dem Riegel 11 in Wirkverbindung stehender Nachstellmechanismus 20 vorgesehen, der die Anlagefläche 12 des Riegels 11 in Anlage an der der seitlichen Öffnung 8 zugewandten Stirnfläche 13 der Energieversorgungseinheit 2 hält.

Der Nachstellmechanismus 20 ist als Keilmechanismus 21 ausgebildet ist, der einen mit dem Riegel 11 zusammenwirkenden Keil 22 aufweist.

Der Nachstellmechanismus 20 ist selbstnachstellend ausgebildet, so dass bei in der Verriegelungsstellung befindlichem Riegel 11 der Riegel 11 bei einer Bewegung der Energieversorgungseinheit 2 in Fahrzeugquerrichtung Q nach Innen selbstständig eine Axialbewegung in Längsrichtung der Schwenkachse S durchführt.

Der Riegel 11 ist hierzu an einem Lagerbolzen 25 ausgebildet. Der Lagerbolzen 25 ist in einem Lagerbauteil 26 um die Schwenkachse S drehbar gelagert und in dem Lagerbauteil 26 in Längsrichtung der Schwenkachse S längsverschiebbar angeordnet ist. Das Lagerbauteil 26 ist hierbei an Flurförderzeug 1 befestigt.

Der Keil 22 liegt mit einer geneigt zur Vertikalen angeordneten Schrägfläche 30 an einer ebenfalls geneigt zur Vertikalen angeordneten Schrägfläche 31 des Lagerbauteils 26 an und steht mit dem Lagerbolzen 25 in Wirkverbindung. Durch eine Bewegung des Keils 22 entlang der Schrägfläche 30 nach oben bzw. unten wird somit eine Axialbewegung des Lagerbolzens 26 in Längsrichtung der Schwenkachse S erzeugt.

Der Lagerbolzen 25 ist mit einem Mitnehmer 34 versehen, an dem der Keil 22 mit einer der Schrägfläche 30 gegenüberliegenden Stirnseite 35 anliegt. Der Mitnehmer 34 kann von einer Scheibe oder einer Platte gebildet sein, der auf einen Gewindeabsatz 36 des Lagerbolzens 25 aufgebschraubt ist. Der Keil 22 ist somit in Längsrichtung der Schwenkachse S zwischen dem Lagerbauteil 26 und dem Mitnehmer 34 angeordnet. Der Keil 22 ist bevorzugt mit einer Ausnehmung versehen, durch die sich der Lagerbolzen 25 hindurcherstreckt.

Die Neigung der Schrägfläche 30 des Keils 22 und der Schrägfläche 31 des Lagerbauteils 26 ist bevorzugt derart ausgebildet, dass eine Selbsthemmung auftritt.

Weiterhin ist ein eine Kraft erzeugender Aktuator 40 vorgesehen, der den Keil 22 nach Vertikal unten entlang der Schrägfläche 31 des Lagerbauteils 26 beaufschlagt, so dass der Riegel 11 von der Kraft des Aktuators 40 in Fahrzeugquerrichtung Q nach Innen beaufschlagt wird. Der Aktuator 40 ist im dargestellten Ausführungsbeispiel als Federeinrichtungen 41, beispielsweise als Druckfeder, ausgebildet.

Der Aktuator 40 ist an dem Lagerbauteil 26 abgestützt und greift an einem Betätigungshebel 45 an, der an dem Lagerbauteil 26 um eine Schwenkachs S2 schwenkbar gelagert ist und mit dem Keil 22 gekoppelt ist. Die Schwenkachse S2 ist senkrecht zur Schwenkachse S des Lagerbolzens 25 angeordnet.

Die Kopplung des Betätigungshebels 45 mit dem Keil 22 weist einen Zapfen 46 auf, der in eine langlochartige Ausnehmung 47 eingreift. Der Zapfen 46 ist im dargestellten Ausführungsbeispiel an dem Keil 22 und die langlochartige Ausnehmung 46 an dem Betätigungshebel 45 angeordnet.

Der Betätigungshebel 45 ist mit einer manuell betätigbaren Betätigungsfläche 48 versehen, an der eine der Kraft des Aktuators 40 entgegenwirkende Betätigungskraft von einer Bedienperson aufgebracht werden kann.

An dem Lagerbauteil 26 ist ein Anschlag 50 vorgesehen, der die Verriegelungsstellung des Riegels 11 definiert.

Mit der erfindungsgemäßen Sicherungseinrichtung 10 wird eine selbstnachstellende Verriegelung der Energieversorgungseinheit 2 in Fahrzeugquerrichtung Q erzielt, die bei einer Bewegung der Energieversorgungseinheit 2 in Fahrzeugquerrichtung Q nach Innen ein selbstständiges, stufenloses Nachstellen des in der Verriegelungsstellung befindlichen Riegels 11 ermöglicht. Der Nachstellmechanismus 20, der im dargestellten Ausführungsbeispiel als die Federeinrichtung 41 umfassender Feder-Keilmechanismus 21 ausgebildet ist, ermöglicht es, dass die in dem Aufnahmeraum 5 befindliche Energieversorgungseinheit 2 permanent und selbstnachstellend (selbstständig) von dem in der Verriegelungsstellung befindlichen Riegel 11 geklemmt wird.

Mit dem Nachstellmechanismus 20 können Toleranzen an der Energieversorgungseinheit 2 und im Aufnahmeraum 5 ausgeglichen werden und ein möglicherweise bestehendes Spiel zwischen dem Riegel 11 und der Stirnfläche 13 der Energieversorgungseinheit 2 eliminiert werden. Der Nachstellmechanismus 20 ermöglicht es weiterhin, dass ein Spiel, das nach dem Einsetzen der Energieversorgungseinheit 2 in dem Aufnahmeraum 5 in Fahrzeugquerrichtung Q an der der Öffnung 8 gegenüberliegenden Fahrzeugseite zwischen dem Aufnahmeraum 5 und der Energieversorgungseinheit 2 verbleibt, bei einem entsprechenden seitlichen Rutschen der Energieversorgungseinheit 2 im Fahrbetrieb des Flurförderzeugs 1 automatisch durch eine entsprechende Axialbewegung des Riegels 11 in Längsrichtung der Schwenkachse S in Fahrzeugquerrichtung Q nach Innen eliminiert werden kann.

Bei der erfindungsgemäßen Verriegelungseinrichtung 10 werden mit dem um die Schwenkachse S verschwenkbar angeordneten schwenkbaren Riegel 11 in Verbindung mit dem Nachstellmechanismus 20 die Funktionen des zwischen der Verriegelungsstellung und der Freigabestellung verschwenkbaren Riegels 11 mit einer selbstständigen Nachstellfunktion vereint.

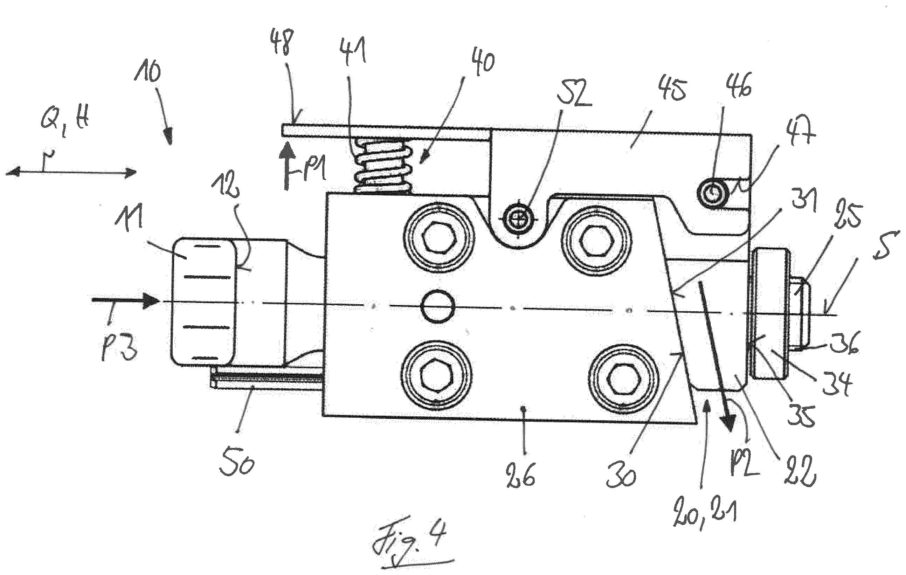

Der Riegel 11 ist über den Lagerbolzen 25 um die Schwenkachse S verschwenkbar in dem Lagerbauteil 26 angeordnet und somit zwischen der Verriegelungsstellung und der Freigabestellung verschwenkbar. Über den von dem Aktuator 40, beispielsweise der Druckfeder, belasteten Betätigungshebel 45 (siehe Pfeil P1 in der Figur 4) ist der Keil 22 nach unten beaufschlagt (siehe Pfeil P2 in der Figur 4), so dass der Keil 22 über den Mitnehmer 25 und die Schrägflächen 30, 31 eine Axialbewegung des Lagerbolzens 25 und somit des Riegels 11 in Längsrichtung der Schwenkachse S erzeugt (siehe Pfeil P3 in der Figur 4). Bei einer Betätigung des Keils 22 des Keilmechanismus 21 nach unten wird hierbei der Riegel 11 in Fahrzeugquerrichtung Q nach Innen beaufschlagt. Mit dem von dem Aktuator 40 betätigten Keil 22 wird hierbei der Lagerbolzen 25 solange in Längsrichtung der Schwenkachse S betätigt, bis der Riegel 11 mit der Anlagefläche 12 spielfrei an der Stirnfläche 13 der Energieversorgungseinheit 2 anliegt.

Nach dem Einsetzen der Energieversorgungseinheit 2 in das Aufnahmefach 5 kann der Lagerbolzen 25 und somit der Riegel 11 auch unabhängig von dem Aktuator 40 von Hand und somit manuell in Anlage an die Stirnfläche 13 der Energieversorgungseinheit 2 verschoben werden.

Durch Drücken auf die Betätigungsfläche 48 des Betätigungshebels 45 kann der Betätigungshebel 45 entgegen der Kraft des Aktuators 40 um die Schwenkachse S2 verschwenkt werden und der Keil 22 nach oben betätigt werden. Hierdurch wird der Riegel 11 entriegelt, um diesen zum Ausbau der Energieversorgungseinheit 2 aus dem Aufnahmeraum 5 von der Verriegelungsstellung in die Freigabeverstellung verschwenken zu können.

Mit dem erfindungsgemäßen längsverschiebbaren Riegel 11 wird in Verbindung mit dem Nachstellmechanismus 20, der eine Axialbewegung des Riegels 11 in Längsrichtung der Schwenkachse S erzeugt, eine spielfreie Klemmung der Energieversorgungseinheit 2 im Aufnahmeraum 5 erzielt, mit der ein Spiel zwischen der Anschlagfläche 12 des in der Verriegelungsstellung befindlichen Riegels 11 und der Fläche 13 der Energieversorgungseinheit 2 eliminiert wird. Mit dem Nachstellmechanismus 20 wird weiterhin erzielt, dass bei einem Rutschen der Energieversorgungseinheit 2 in Fahrzeugquerrichtung Q nach Innen im Betrieb des Flurförderzeugs 1 der Riegel 11 der Bewegung der der Energieversorgungseinheit 2 durch eine Axialbewegung in Längsrichtung der Schwenkachse S selbstständig folgt, so dass eine permanente, selbstnachstellende und spielfreie Klemmung der Energieversorgungseinheit 2 im Aufnahmeraum 5 erzielt wird. Ein ungewolltes Rutschen der Energieversorgungseinheit 2 in Fahrzeugquerrichtung Q kann mit der erfindungsgemäßen Sicherungseinrichtung 10 wirksam verhindert werden. Durch die selbsttätige Nachstellbarkeit der erfindungsgemäßen Sicherungseinrichtung 10 werden somit unerwünschte Bewegungen der Energieversorgungseinheit 2 in Fahrzeugquerrichtung Q und somit in Bewegungsrichtung der Energieversorgungseinheit 2 wirksam vermieden, so dass im Betrieb des Flurförderzeugs 1 kein Anschlagen der Energieversorgungseinheit 2 an der Sicherungseinrichtung 10 auftritt und dadurch die mechanischen Belastungen der Energieversorgungseinheit 2 sowie die Sicherungseinrichtung 10 verringert werden.

Durch die verschwenkbare und längsverschiebbare Lagerung des Riegels 11 an dem Lagerbauteil 26, an dem weiterhin der Keil 22 und der Betätigungshebel 45 mit dem Aktuator 40 angeordnet ist, ermöglicht einen kompakten Aufbau und eine kompakte Montagebaugruppe der Sicherungseinrichtung 10, die auf einfache Weise an dem Flurförderzeug 1 angebaut und nachgerüstet werden kann.

Es versteht sich, dass für den Riegel 11 eine nicht näher dargestellte Sensorik vorgesehen werden kann, mit der die Verriegelungsstellung des Riegels 11 überwacht und erfasst werden kann.

Zudem kann eine hydraulische oder pneumatische Unterstützung vorgesehen werden, um den Keil 22 nach oben und/oder unten bewegen zu können.

## Patentansprüche

1. Flurförderzeug (1), insbesondere elektrisch betriebenes Flurförderzeug, mit einer in einem Aufnahmeraum (5) angeordneten Energieversorgungseinheit (2), insbesondere einem in einem Batteriefach angeordneten Batterieblock (6), wobei das Flurförderzeug (1) mit einer seitlichen Öffnung (8) für einen seitlichen Wechsel der Energieversorgungseinheit (2) in horizontaler Richtung (H) versehen ist, und eine Sicherungseinrichtung (10) zum Sichern der in dem Aufnahmeraum (5) angeordneten Energieversorgungseinheit (2) während des Betriebs des Flurförderzeugs (1) vorgesehen ist, wobei die Sicherungseinrichtung (10) eine Anlagefläche (12) für eine der seitlichen Öffnung (8) zugewandten Fläche (13) der Energieversorgungseinheit (2) aufweist und als zwischen einer Freigabestellung und einer Verriegelungsstellung um eine Schwenkachse (S) verschwenkbar am Flurförderzeug (1) angeordneter Riegel (11) ausgebildet ist, wobei der Riegel (11) in Längsrichtung der Schwenkachse (S) verschiebbar am Flurförderzeug (1) angeordnet ist und ein mit dem Riegel (11) in Wirkverbindung stehender Nachstellmechanismus (20) vorgesehen ist, der die Anlagefläche (12) des Riegels (11) in Anlage an der der seitlichen Öffnung (8) zugewandten Fläche (13) der Energieversorgungseinheit (2) hält, **dadurch gekennzeichnet, dass** der Nachstellmechanismus (20) als Keilmechanismus (21) ausgebildet ist, der einen mit dem Riegel (11) zusammenwirkenden Keil (22) aufweist.

2. Flurförderzeug nach Anspruch 1, **dadurch gekennzeichnet, dass** der Nachstellmechanismus (20) selbstnachstellend ausgebildet ist, so dass bei in der Verriegelungsstellung befindlichem Riegel (11) der Riegel (11) bei einer Bewegung der Energieversorgungseinheit (2) in Fahrzeugquerrichtung (Q) selbstständig eine Axialbewegung in Längsrichtung der Schwenkachse (S) durchführt.

3. Flurförderzeug nach Anspruch 1 oder 2, **dadurch gekennzeichnet, dass** der Riegel (11) einen Lagerbolzen (25) aufweist, der in einem Lagerbauteil (26), das am Flurförderzeug (1) befestigt ist, um die Schwenkachse (S) gelagert ist und der in dem Lagerbauteil (26) in Längsrichtung der Schwenkachse (S) längsverschiebbar angeordnet ist, wobei der Keil (22) mit einer Schrägfläche (30) an einer Schrägfläche (31) des Lagerbauteils (26) anliegt und mit dem Lagerbolzen (25) in Wirkverbindung steht, so dass durch eine Bewegung des Keils (22) entlang der Schrägfläche (31) eine Axialbewegung des Lagerbolzens (25) in Längsrichtung der Schwenkachse (S) erzeugt wird.

4. Flurförderzeug nach Anspruch 3, **dadurch gekennzeichnet, dass** der Lagerbolzen (25) mit einem Mitnehmer (34) versehen ist, an dem der Keil (22) anliegt.

5. Flurförderzeug nach Anspruch 3 oder 4 **dadurch gekennzeichnet, dass** zwischen der Schrägfläche (30) des Keils (22) und der Schrägfläche (31) des Lagerbauteils (26) eine Selbsthemmung vorgesehen ist.

6. Flurförderzeug nach einem der Ansprüche 3 bis 5, **dadurch gekennzeichnet, dass** ein eine Kraft erzeugender Aktuator (40) vorgesehen ist, der den Keil (22) derart entlang der Schrägfläche (31) des Lagerbauteils (26) beaufschlagt, dass der Riegel (22) von der Kraft des Aktuators (40) in Fahrzeugquerrichtung (Q) nach Innen beaufschlagt wird.

7. Flurförderzeug nach Anspruch 6, **dadurch gekennzeichnet, dass** der Aktuator (40) als Federeinrichtung (41), insbesondere als Druckfeder, ausgebildet ist.

8. Flurförderzeug nach Anspruch 6, **dadurch gekennzeichnet, dass** der Aktuator (40) als Gasfeder oder als Spindel ausgebildet ist.

9. Flurförderzeug nach einem der Ansprüche 6 bis 8, **dadurch gekennzeichnet, dass** der Aktuator (40) an einem Betätigungshebel (45) angreift, der an dem Lagerbauteil (26) schwenkbar gelagert ist und mit dem Keil (22) gekoppelt ist.

10. Flurförderzeug nach Anspruch 9, **dadurch gekennzeichnet, dass** die Kopplung des Betätigungshebels (45) mit dem Keil (22) einen Zapfen (46) aufweist, der in eine langlochartige Ausnehmung (47) eingreift.

11. Flurförderzeug nach Anspruch 10, **dadurch gekennzeichnet, dass** der Zapfen (46) an dem Keil (22) und die langlochartige Ausnehmung (47) an dem Betätigungshebel (45) angeordnet ist.

12. Flurförderzeug nach Anspruch 9 oder 10, **dadurch gekennzeichnet, dass** der Betätigungshebel (45) mit einer manuell betätigbaren Betätigungsfläche (48) versehen ist, an der eine der Kraft des Aktuators (40) entgegenwirkende Betätigungskraft aufbringbar ist.

## Claims

1. Industrial truck (1), in particular electrically operated industrial truck, with an energy supply unit (2) arranged in a receiving space (5), in particular a battery block (6) arranged in a battery compartment, wherein the industrial truck (1) is provided with a lateral opening (8) for lateral exchange of the energy supply unit (2) in a horizontal direction (H), and a securing device (10) is provided for securing the energy supply unit (2), which is arranged in the receiving space (5), during the operation of the industrial truck (1), wherein the securing device (10) has a contact surface (12) for a surface (13) of the energy supply unit (2) facing the lateral opening (8), and is in the form of a bolt (11) which is arranged on the industrial truck (1) so as to be pivotable about pivot axis (S) between a release position and a locking position, wherein the bolt (11) is arranged on the industrial truck (1) so as to be displaceable in the longitudinal direction of the pivot axis (S), and an adjustment mechanism (20) is provided which is operatively connected to the bolt (11) and keeps the contact surface (12) of the bolt (11) in contact against that surface (13) of the energy supply unit (2) which faces the lateral opening (8), **characterized in that** the adjustment mechanism (20) is in the form of a wedge mechanism (21) which has a wedge (22) interacting with the bolt (11).

2. Industrial truck according to Claim 1, **characterized in that** the adjustment mechanism (20) is self-adjusting, and therefore, when the bolt (11) is in the locking position, the bolt (11) automatically carries out an axial movement in the longitudinal direction of the pivot axis (S) during a movement of the energy supply unit (2) in the transverse direction (Q) of the vehicle.

3. Industrial truck according to Claim 1 or 2, **characterized in that** the bolt (11) has a bearing pin (25) which is mounted about the pivot axis (S) in a bearing component (26) fastened to the industrial truck (1), and which is arranged in the bearing component (26) so as to be displaceable longitudinally in the longitudinal direction of the pivot axis (S), wherein the wedge (22) lies with an oblique surface (30) against an oblique surface (31) of the bearing component (26) and is operatively connected to the bearing pin (25) such that, by movement of the wedge (22) along the oblique surface (31), an axial movement of the bearing pin (25) in the longitudinal direction of the pivot axis (S) is produced.

4. Industrial truck according to Claim 3, **characterized in that** the bearing pin (25) is provided with a driver (34) against which the wedge (22) lies.

5. Industrial truck according to Claim 3 or 4, **characterized in that** self-locking is provided between the oblique surface (30) of the wedge (22) and the oblique surface (31) of the bearing component (26).

6. Industrial truck according to one of Claims 3 to 5, **characterized in that** a force-generating actuator (40) is provided which urges the wedge (22) along the oblique surface (31) of the bearing component (26) in such a manner that the bolt (22) is urged inwards in the transverse direction (Q) of the vehicle by the force of the actuator (40).

7. Industrial truck according to Claim 6, **characterized in that** the actuator (40) is in the form of a spring device (41), in particular in the form of a compression spring.

8. Industrial truck according to Claim 6, **characterized in that** the actuator (40) is in the form of a gas-filled spring or in the form of a spindle.

9. Industrial truck according to one of Claims 6 to 8, **characterized in that** the actuator (40) acts on an actuating lever (45) which is mounted pivotably on the bearing component (26) and is coupled to the wedge (22).

10. Industrial truck according to Claim 9, **characterized in that** the coupling of the actuating lever (45) to the wedge (22) has a stud (46) which engages in a slot-like recess (47).

11. Industrial truck according to Claim 10, **characterized in that** the stud (46) is arranged on the wedge (22) and the slot-like recess (47) is arranged on the actuating lever (45).

12. Industrial truck according to Claim 9 or 10, **characterized in that** the actuating lever (45) is provided with a manually actuable actuating surface (48) to which an actuating force acting counter to the force of the actuator (40) can be applied.

## Revendications

1. Chariot élévateur (1), en particulier chariot élévateur à entraînement électrique, comprenant une unité d'alimentation en énergie (2) disposée dans un espace de réception (5), en particulier un bloc de batterie (6) disposé dans un compartiment de batterie, le cariot élévateur (1) étant pourvu d'une ouverture latérale (8) destinée à un changement latéral de l'unité d'alimentation en énergie (2) dans la direction horizontale (H), et un moyen de fixation (10) étant prévu pour fixer l'unité d'alimentation en énergie (2), disposée dans l'espace de réception (5), pendant le fonctionnement du chariot élévateur (1), le moyen de fixation (10) comportant une surface d'appui (12) destinée à une surface (13), dirigée vers l'ouverture latérale (8), de l'unité d'alimentation en énergie (2) et étant conçu comme un verrou (11) disposé au niveau du chariot élévateur (1) de manière pivotante sur un axe de pivotement (S) entre une position de libération et une position de verrouillage, le verrou (11) étant disposé au niveau du chariot élévateur (1) de manière coulissante dans la direction longitudinale de l'axe de pivotement (S) et un mécanisme de réglage (20) étant prévu qui est relié fonctionnellement au verrou (11) et qui maintient la surface d'appui (12) du verrou (11) en appui sur la surface (13), dirigée vers l'ouverture latérale (8), de l'unité d'alimentation en énergie (2), **caractérisé en ce que** le mécanisme de réglage (20) est conçu comme un mécanisme à clavette (21) qui comporte une clavette (22) qui coopère avec le verrou (11).

2. Chariot élévateur selon la revendication 1, **caractérisé en ce que** le mécanisme de réglage (20) est conçu pour être autoréglable de sorte que, lorsque le verrou (11) se trouve dans la position de verrouillage, le verrou (11) effectue de manière autonome un mouvement axial dans la direction longitudinale de l'axe de pivotement (S) lorsque l'unité d'alimentation en énergie (2) se déplace dans la direction transversale (Q) du véhicule.

3. Chariot élévateur selon la revendication 1 ou 2, **caractérisé en ce que** le verrou (11) comporte un axe de palier (25) qui est monté sur l'axe de pivotement (S) dans un composant de palier (26), qui est fixé au chariot élévateur (1), et qui est disposé dans le composant de palier (26) de manière coulissante longitudinalement dans la direction longitudinale de l'axe de pivotement (S), la clavette (22) venant en appui avec une surface inclinée (30) sur une surface inclinée (31) du composant de palier (26) et étant en liaison fonctionnelle avec l'axe de palier (25) de sorte qu'un mouvement de la clavette (22) le long de la surface inclinée (31) génère un mouvement axial de l'axe de palier (25) dans la direction longitudinale de l'axe de pivotement (S).

4. Chariot élévateur selon la revendication 3, **caractérisé en ce que** l'axe de palier (25) est muni d'un entraîneur (34) sur lequel la clavette (22) vient en appui.

5. Chariot élévateur selon la revendication 3 ou 4, **caractérisé en ce qu'**un autoblocage est prévu entre la surface inclinée (30) de la clavette (22) et la surface inclinée (31) du composant de palier (26).

6. Chariot élévateur selon l'une des revendications 3 à 5, **caractérisé en ce qu'**il est prévu un actionneur générateur de force (40) qui pousse la clavette (22) le long de la surface inclinée (31) du composant de palier (26) de sorte que le verrou (22) est poussé vers l'intérieur par la force de l'actionneur (40) dans la direction transversale (Q) du véhicule.

7. Chariot élévateur selon la revendication 6, **caractérisé en ce que** l'actionneur (40) est conçu sous la forme d'un dispositif à ressort (41), notamment sous la forme d'un ressort de compression.

8. Chariot élévateur selon la revendication 6, **caractérisé en ce que** l'actionneur (40) est conçu sous la forme d'un ressort à gaz ou d'une broche.

9. Chariot élévateur selon l'une des revendications 6 à 8, **caractérisé en ce que** l'actionneur (40) s'engage sur un levier d'actionnement (45) qui est monté à pivotement sur le composant de palier (26) et est accouplé à la clavette (22).

10. Chariot élévateur selon la revendication 9, **caractérisé en ce que** l'accouplement du levier d'actionnement (45) à la clavette (22) est effectué par le biais d'une goupille (46) qui s'engage dans un évidement (47) en forme de trou oblong.

11. Chariot élévateur selon la revendication 10, **caractérisé en ce que** la goupille (46) est disposée au niveau de la clavette (22) et l'évidement (47) en forme de trou oblong est disposé au niveau du levier d'actionnement (45).

12. Chariot élévateur selon la revendication 9 ou 10, **caractérisé en ce que** le levier d'actionnement (45) est pourvu d'une surface d'actionnement (48), pouvant être actionnée manuellement, sur laquelle peut être appliquée une force d'actionnement s'opposant à la force de l'actionneur (40).
